(19) **Europäisches Patentamt**

**European Patent Office**

**Office européen des brevets**

(11) **EP 1 474 928 B1**

(12) **FASCICULE DE BREVET EUROPEEN**

(45) Date de publication et mention
de la délivrance du brevet:
**08.06.2005 Bulletin 2005/23**

(51) Int Cl.⁷: **H04N 7/26**

(21) Numéro de dépôt: **03715077.8**

(86) Numéro de dépôt international:
**PCT/FR2003/000409**

(22) Date de dépôt: **10.02.2003**

(87) Numéro de publication internationale:
**WO 2003/069915 (21.08.2003 Gazette 2003/34)**

(54) **DISPOSITIF ET METHODE DE RECODAGE D'UN FLUX DE DONNEES VIDEO**

VERFAHREN UND VORRICHTUNG ZUR UMKODIERUNG EINES VIDEODATENSTROMS

DEVICE AND METHOD FOR RECODING A VIDEO DATA STREAM

(84) Etats contractants désignés:
**AT BE BG CH CY CZ DE DK EE ES FI FR GB GR
HU IE IT LI LU MC NL PT SE SI SK TR**

(30) Priorité: **11.02.2002 FR 0201744**

(43) Date de publication de la demande:
**10.11.2004 Bulletin 2004/46**

(73) Titulaire: **Nextream France
95800 Cergy Saint-Christophe (FR)**

(72) Inventeurs:
• **DUCLOUX, Xavier
F-35200 RENNES (FR)**
• **ALEXANDRE, Patrice
F-35510 CESSON SEVIGNE (FR)**
• **DUMENIL, Patrick
F-35830 BETTON (FR)**

(74) Mandataire: **Le Dantec, Claude
Thomson,
46, Quai Alphonse Le Gallo
92100 Boulogne-Billancourt (FR)**

(56) Documents cités:
**WO-A-96/25823 US-A1- 2001 006 562
US-B1- 6 233 278**

EP 1 474 928 B1

**Description**

L'invention concerne un dispositif et une méthode de recodage d'un flux de données vidéo.

Le développement des applications multimédia et la multiplicité des réseaux de données, rendent les systèmes de codage de données de plus en plus complexes. L'interconnexion de réseaux hétérogènes rend souvent nécessaire le recodage, appelé communément transcodage, des flux de données qu'ils véhiculent. Ce recodage peut être effectué dans un standard de compression différent du standard de compression initial (par exemple, recodage selon la norme MPEG-4 AVC (acronyme anglais de « Advanced Video Coding ») de flux initialement codés selon la norme MEPG-2 ou MPEG-4).

Le recodage est aussi principalement utilisé dans des réseaux ayant des contraintes de débit importantes. De tels systèmes de recodage permettent alors d'adapter le débit d'un flux entrant aux exigences et aux limitations du réseau.

La régulation de débits utilisés dans des codeurs ou des transcodeurs vidéo de type MPEG est menée par l'intermédiaire d'une boucle de régulation agissant sur le pas de quantification des coefficients DCT (DCT acronyme anglais de « Discrete Cosinus Transform » signifiant « transformée en cosinus discrete ») des blocs de l'image. La qualité et la stabilité de cette régulation dépendent pour une grande part de la qualité de prédiction des complexités des images à coder pour le prochain groupe d'images.

Dans un contexte d'images sources, de nombreuses techniques de codage double passe ont été développées, la première passe de codage permettant d'assurer une connaissance précise des complexités des images à coder, la deuxième passe codant alors les images en fonction de cette complexité.

De telles techniques de codage double passe sont très performantes mais onéreuses pour des systèmes de transcodage.

L'invention propose donc un dispositif de recodage de séquences d'images se basant sur l'évaluation des complexités avant et après transcodage des images à recoder.

A cet effet, l'invention propose un dispositif de recodage d'images selon un débit de consigne donné d'un flux vidéo comportant des séquences d'images initialement codées selon au moins un mode, comportant :

- des moyens d'extraire des informations associées au recodage des images, lesdites informations représentant au moins la complexité (Xrecod) de recodage de chaque image,
- des moyens d'extraire des informations, notamment de complexité de codage ($X_{init}$), associées au codage initial des images,

Selon l'invention, le dispositif comporte :

- des moyens de calculer un rapport ($Ratio_x$), dit rapport de complexité, des complexités ($X_{recod}$) de recodage des images précédemment recodées selon ledit mode sur les complexités ($X_{init}$) de codage initial de ces images,
- des moyens de mettre à jour un rapport de complexité moyenné ($SmoothedRatio_x$ [mode]) pour ledit mode en fonction du rapport de complexité ($Ratio_X$) et
- des moyens de recoder chaque image selon ledit mode en estimant la complexité ($X_{pred}$) de chaque image à recoder comme étant le produit de la complexité ($X_{init}$) de codage initial de ladite image par le rapport de complexité moyenné pour ledit mode ($SmoothedRatio_x$ [mode]).

Les inventeurs se sont aperçus que, contrairement à une idée bien connue dans le contexte du codage, la complexité d'une image n'est pas constante dans le contexte du transcodage d'images :

- dans le cas d'un transcodage au sein d'un même standard de compression, la complexité dépend du pas de quantification appliqué à l'image et donc du débit de codage de la séquence d'images.
- dans le cas d'un transcodage avec changement de standard de compression, la complexité dépend des caractéristiques propres à chaque algorithme de compression, ainsi que des paramètres précédents.

Par contre, dans les deux cas de transcodage, le rapport des complexités d'images initiales et recodées est relativement stable.

L'extraction des mesures avant recodage peut permettre de minimiser l'intelligence nécessaire pour obtenir une qualité de codage suffisante et l'extraction des mesures après recodage peut permettre d'obtenir un bon fonctionnement de la boucle de régulation de débits en assurant une bonne qualité de prédiction des complexités des images recodées.

Les informations issues du codage et du recodage permettent d'appréhender les complexités des images et donc de définir les nouveaux paramètres de recodage pour les futures images à coder.

De cette façon, l'invention peut permettre une réduction de coût, éventuellement considérable, par rapport aux dispositifs utilisant des codeurs double passe.

Selon un mode préféré de réalisation, le dispositif comporte des moyens de mémoriser, pour plusieurs images consécutives définissant une période de référence, des informations associées au codage initial, lesdites informations étant

- la complexité de codage initial ($X_{init}$) des images de la période de référence,
- le coût non compressible (GlobalOverhead$_{init}$) de codage initial des images de la période de référence,

Pour chaque image courante à coder, selon ce mode de réalisation préféré, le dispositif mémorise les complexités d'un certain nombre d'images entrantes à recoder et appartenant à une période de référence déterminée et utilise la complexité de recodage d'un certain nombre d'images recodées précédemment afin de déterminer le pas de quantification à appliquer à l'image courante à recoder.

Selon un mode préféré de réalisation, les moyens de recoder chaque image sont fonction des informations associées au codage initial des images appartenant à la période de référence.

Ainsi, il est possible d'obtenir une stabilité dans le temps en basant le recodage sur les informations de codage et de recodage issues de plusieurs des images précédemment recodées.

L'invention concerne également un procédé de recodage d'images selon un débit de consigne donné d'un flux vidéo comportant des séquences d'images initialement codées selon au moins un mode, comportant les étapes de :

- extraction des informations associées au recodage de certaines images, lesdites informations représentant au moins la complexité (Xrecod) de recodage de chaque image,
- extraction des informations, notamment de complexité de codage ($X_{init}$), associées au codage initial de certaines images,

Selon l'invention, le procédé comporte les étapes de :

- calcul d'un rapport (Ratio$_x$), dit rapport de complexité, des complexités ($X_{recod}$) de recodage des images précédemment recodées selon ledit mode sur les complexités ($X_{init}$) de codage initial de ces images,
- mise à jour d'un rapport de complexité moyenné (SmoothedRatio$_x$ [mode]) pour ledit mode en fonction du rapport de complexité (Ratio$_x$) et
- recodage de chaque image selon ledit mode en estimant la complexité ($X_{pred}$) de chaque image à recoder comme étant le produit de la complexité ($X_{init}$) de codage initial de ladite image par le rapport de complexité moyenné pour ledit mode (SmoothedRatio$_x$ [mode]).

L'invention sera mieux comprise, et d'autres particularités et avantages apparaîtront à la lecture de la description des exemples de réalisation qui vont suivre, pris à titres d'exemples non limitatifs, en référence aux dessins annexés parmi lesquels :

- la figure 1 représente un mode de réalisation d'un système incluant un dispositif selon l'invention,
- la figure 2 représente un mode de réalisation d'un dispositif selon un mode de réalisation de l'invention.

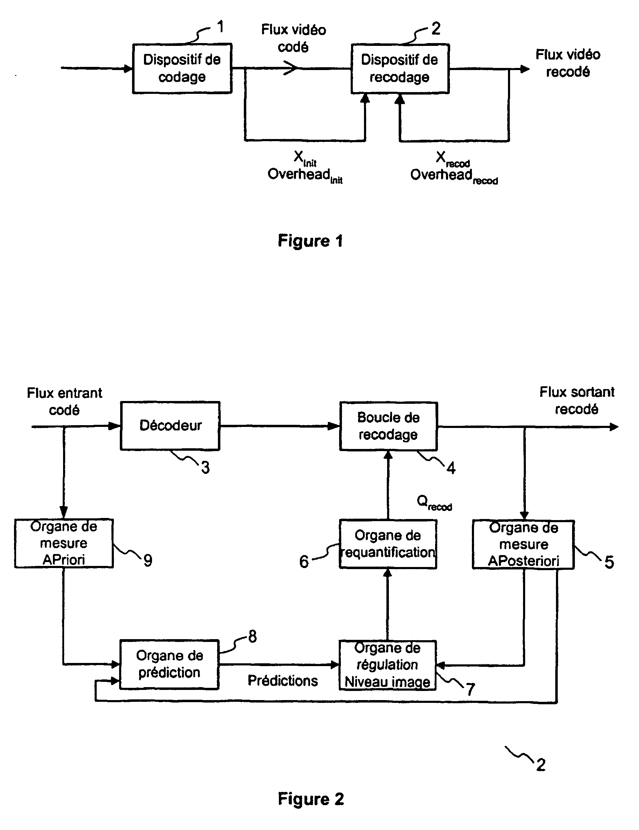

Un système représentant un dispositif 1 de codage de séquences d'images vidéo ainsi qu'un dispositif 2 de recodage des mêmes séquences est représenté sur la figure 1.

Le dispositif de codage 1 est un codeur de type une passe.

Le dispositif de codage 1 transmet un flux de données, plus particulièrement un flux audio/vidéo, au dispositif de recodage 2. Les deux dispositifs de codage 1 et de recodage 2 sont dans l'exemple de réalisation donné, interconnectés par l'intermédiaire d'un réseau de communication et donc distants mais peuvent être interconnectés en local dans d'autres modes de réalisation.

Le dispositif de recodage 2 reçoit également la complexité, $X_{init}$, et le coût non compressible, Overhead$_{init}$, associé à chaque image du flux vidéo entrant et représentatif respectivement de la complexité et du coût non compressible du codage initial effectué par le dispositif de codage 1 sur le flux vidéo.

Le dispositif de recodage 2 utilise également les informations de recodage issues du flux sortant recodé. Ces informations de recodage sont la complexité de recodage, $X_{recod}$, et le coût non compressible de recodage, Overhead$_{init}$.

La figure 2 représente un exemple de bloc diagramme d'un dispositif de recodage selon l'invention.

Le dispositif comporte un décodeur 3 connecté à une boucle de recodage 4 et à un organe de mesure à priori 9. Le décodeur 3 ainsi que l'organe de mesure à priori 9 reçoivent en entrée un flux binaire émis par un dispositif de codage 1 comme représenté en figure 1. Le flux binaire est composé de séquences représentatives d'images codées. Les images peuvent être codées selon différents modes et par exemple selon les normes MPEG-2, MPEG-4 ASP (acronyme anglais de « Advanced Simple Profile ») ou MPEG-4 AVC (acronyme anglais de « Advanced Video Coding »). Dans un mode de réalisation préféré détaillé par la suite, les images peuvent être codées selon trois modes, intra, bidirectionnel ou prédictif selon la norme MPEG-2.

Le décodeur 3 produit en sortie un flux vidéo qui rentre dans la boucle de recodage 4.

La boucle de recodage produit un flux binaire recodé à partir du flux vidéo produit par le décodeur 3 et de la valeur $Q_{recod}$ de quantification fournie par un organe de re-quantification 6.

La boucle de recodage 4 est reliée à un organe de mesure à posteriori 5. Cet organe est chargé de mesurer la complexité, $X_{recod}$, et le coût non compressible, $Overhead_{recod}$, du flux en sortie de la boucle de recodage 4.

L'organe de mesure à priori 9 reçoit des images organisées en séquence ou non.

L'organe de mesure à priori 9 extrait le coût compressible, $Enccost_{init}$, de chaque image.

L'organe de mesure à priori 9 extrait la complexité, $X_{init}$, de chaque image. La complexité est exprimée comme le produit du coût compressible, $Enccost_{init}$ par le pas de quantification, $Q_{init}$.

Dans le mode de réalisation donné en exemple, la complexité est transmise dans le flux vidéo et à chaque image est associée une complexité.

Dans une variante de réalisation, la complexité de chaque image n'est pas transmise avec le flux et l'organe de mesure à priori 9 la calcule en fonction du flux binaire.

L'organe de mesure à priori 9 extrait également le coût non compressible encore appelé coût de syntaxe, $Overhead_{init}$, de chaque image.

Dans le mode de réalisation donné en exemple, le coût non compressible est transmis dans le flux vidéo et à chaque image est associé un coût non compressible, $Overhead_{init}$.

Dans une variante de réalisation, le coût non compressible de codage initial de chaque image n'est pas transmis avec le flux et l'organe de mesure à priori le calcule en fonction du flux binaire.

Par extraction de la complexité ou du coût non compressible de codage initial est donc sous-entendu la récupération dans le flux binaire ou le calcul à partir du flux binaire, de la complexité.

Lorsque le module 9 reçoit un certain nombre d'images formant une période de référence, afin d'obtenir une meilleure stabilité dans le temps, il calcule pour chaque période de référence, sa complexité, $GlobalX_{init}$, et son coût non compressible, $GlobalOverhead_{init}$. Une fois que toutes les images sont reçues, le recodage de chaque image de la séquence commence.

Le coût de codage est constitué d'une part du coût compressible et d'autre part du coût non compressible engendré par la syntaxe et le coût des vecteurs.

Dans le cas d'un codage MPEG-2 ou MPEG-4 ASP, le coût compressible est dû principalement aux coefficients de la transformation en cosinus discrète DCT. Dans le cas d'un codage MPEG-4 AVC, le coût compressible est dû à la transformation entière approximant une transformation en DCT.

L'organe de mesure à priori 9 fournit les mesures de complexité initiale, $X_{init}$, et de coût non compressible initial, $Overhead_{init}$, de chaque image codée entrante à un organe de prédiction 8.

L'organe de mesure à posteriori 5 récupère dans le flux de sortie recodé, pour chaque image,

- le coût non compressible $Overhead_{recod}$,
- le pas de quantification $Q_{recod}$.

Il calcule la complexité de recodage de chaque image ($X_{recod}$) qui est le produit du coût compressible par le pas de quantification.

Dans un mode préféré de réalisation, le codage utilisé est de type DCT, acronyme de « discrete cosinus transform » signifiant transformation en cosinus discrète. Dans ce mode préféré, le coût compressible correspond aux coefficients de la transformation en cosinus discrète (DCT) codés selon un code à longueur variable (VLC).

Le module 5 fournit en sortie aux modules 7 et 8, le coût non compressible $Overhead_{recod}$ et le pas de quantification $Q_{recod}$.

L'organe de prédiction 8 calcule pour chaque image, le rapport ($Ratio_{overhead}$) entre le coût non compressible initial de l'image codée sur le coût non compressible de l'image recodée et le rapport ($Ratio_x$) entre la complexité initiale de l'image codée sur la complexité de l'image recodée.

Les rapports ainsi calculés sont mémorisés.

$$Ratio_{overhead} = \frac{Overhead_{recod}}{Overhead_{init}}$$

$$Ratio_x = \frac{X_{recod}}{X_{init}}$$

Le module 8 met à jour, à partir des derniers rapports ainsi mémorisés un rapport de complexité moyenné, $SmoothedRatio_x$, et un rapport de coût non compressible moyenné, $SmoothedRatio_{overhead}$. Les rapports $Ratio_x$ et $Ratio_{overhead}$ utilisés sont évalués sur une période différente de la période de référence. En effet, les valeurs de recodage $Overhead_{recod}$ et $X_{recod}$ ne sont pas connues lors de la réception de la séquence vidéo à recoder puisqu'il s'agit des valeurs de recodage que le dispositif de recodage va justement calculer. Ainsi les rapports utilisés pour le calcul des rapports de coût non compressible et de complexité moyennés se basent sur les valeurs calculées précédemment et mises à jour au fur et à mesure du recodage.

Ces deux facteurs sont calculés pour chaque mode de codage. Ainsi, chaque image à recoder selon un mode est estimée en fonction des images recodées précédemment selon le même mode de codage.

L'organe de prédiction 8 calcule une estimation du coût de l'image à recoder, en calculant une estimation de la complexité de recodage, $X_{pred}$, et une estimation du coût non compressible de recodage, $Overhead_{pred}$, pour l'image courante et pour la période de référence dans laquelle elle se trouve.

$$Overhead_{pred} = SmoothedRatio_{overhead}[\mathrm{mod}\ e] \times Overhead_{init}$$

$$X_{pred} = SmoothedRatio_x[\mathrm{mod} e] \times X_{init}$$

Le module 8 calcule également le coût non compressible ($GlobalOverhead_{pred}$) et la complexité de recodage ($GlobalX_{pred}$) de la période de référence dans laquelle l'image courante se trouve.

$$GlobalOverhead_{pred} = \sum_{\mathrm{mod}\,e} SmoothedRatio_{overhead}[\mathrm{mod}\,e] \times GlobalOverhead_{init}[\mathrm{mod}\,e]$$

$$GlobalX_{pred} = \sum_{\mathrm{mod}\,e} SmoothedRatio_X[\mathrm{mod}\,e] \times GlobalX_{init}[\mathrm{mod}\,e]$$

Cet organe peut ainsi, à partir de ces mesures, fournir une estimation du poids relatif de l'image à recoder dans la période de référence d'image.

L'organe de régulation niveau image 7 calcule le coût compressible de consigne image (Targetcost) en fonction de la consigne de débit fournie par un module de supervision externe (non représenté), permettant à un utilisateur de piloter le recodage, et des prédictions de complexité image et global.

$$T\,\mathrm{arg}\,et\,\mathrm{cos}\,t = \frac{X_{pred}}{GlobalX_{pred}} \times GlobalT\,\mathrm{arg}\,et\,\mathrm{cos}\,t$$

et

$$GlobalT\,\mathrm{arg}\,et\,\mathrm{cos}\,t = \left[\frac{D_{recod}}{frame\_rate} \times Nbimages\right] - GlobalOverhead_{pred}$$

Où :

- $D_{recod}$ est le débit de consigne de recodage, exprimé en bit/s.
- Nbimages est le nombre d'images dans la période de référence.

- frame_rate est le nombre d'images par seconde.

Dans le cas d'un transcodage dans un standard de compression différent, le débit de consigne image (TargetCost) calculé précédemment permet à l'organe de quantification 6 de calculer le pas de quantification moyen $Q_{recod}$ à appliquer à l'image à recoder à partir de la formule suivante :

$$X_{pred} = T \text{ arg } et \text{ } Cost \times Q_{recod}$$

Dans le cas d'un transcodage dans un même standard de compression, le débit de consigne image permet de déduire un gain de compression, applicable pour le calcul du pas de quantification de recodage $Q_{recod}$ à appliquer à chacun des macro-blocs de l'image à recoder. L'organe de régulation niveau image 7 en déduit le gain de compression (GainC) à réaliser sur l'image selon la formule suivante :

$$GainC = \frac{Enc \cos t_{ini}t\text{-}T \text{ arg } et \cos t}{Enc \cos t_{init}}$$

L'organe de régulation niveau image 7 transmet le gain, GainC, à l'organe de requantification 6.

A partir du gain, GainC, l'organe de requantification 6 calcule le pas de quantification $Q_{recod}$ à appliquer à l'image à recoder (globalement ou pour chacun des macro-blocs) à partir des formules suivantes :

$$X_{pred} = T \text{ arg } et \cos t \times Q_{recod}$$

$$X_{init} = Enc \cos t_{init} \times Q_{init}$$

$$X_{pred} = X_{init} \times SmoothedRatio_x[mode]$$

D'où

$$Q_{recod} = \frac{SmoothedRatio_x[mode]}{1 - GainC} \times Q_{init}$$

La boucle de recodage utilise donc le nouveau pas de quantification $Q_{recod}$ afin de recoder la nouvelle image entrante dans la boucle de recodage.

1- L'exemple donné ci-après décrit un mode de réalisation particulier dans le cas d'un transcodeur de type MPEG-2 vers MPEG-2.

La longueur d'une période de référence est la longueur d'un groupe d'images appelé GOP, acronyme anglais de « Group Of Pictures ».

Les différents modes de codage sont le mode Intra (I), Bidirectionnel (B) ou Prédictif (P).

Dans le cas d'un codage de type MPEG-2, la granularité est parfois plus fine qu'une granularité de type image et peut se situer au niveau macrobloc. Dans ce cas, chaque macrobloc de l'image est codé avec son propre pas de quantification.

L'organe de mesure à priori 9 extrait donc pour chaque macrobloc de l'image :

- le coût compressible initial et le coût non compressible initial,
- le pas de quantification,

Il calcule ensuite pour chaque macrobloc la complexité macrobloc, comme étant le produit du coût compressible par le pas de quantification.

Ensuite pour chaque image, il calcule :

- le coût compressible initial, Enccost$_{init}$,
- le coût non compressible initial, Overhead$_{init}$,
- la complexité image initiale, X$_{init}$,

en additionnant respectivement les coûts compressibles, non compressibles et les complexités initiaux des macroblocs formant cette image.

L'organe de mesure calcule ensuite pour chaque groupe d'images (GOP),

- le cumul des coûts compressibles initiaux des images I,
- le cumul des coûts compressibles initiaux des images B,
- le cumul des coûts compressibles initiaux des images P,
- le cumul des coûts non compressibles initiaux des images I, IGOPOverhead$_{init}$.
- le cumul des coûts non compressibles initiaux des images B, BGOPOverhead$_{init}$.
- le cumul des coûts non compressibles initiaux des images P, PGOPOverhead$_{init}$.
- le cumul des complexités initiales des images I, IGOPX$_{init}$,
- le cumul des complexités initiales des images B, BGOPX$_{init}$,
- le cumul des complexités initiales des images P, PGOPX$_{init}$,
- le coût total initial du GOP, GOPcost.

L'organe de mesure à posteriori 5 calcule pour chaque macrobloc de l'image recodée :

- le coût compressible,
- le pas de quantification,
- la complexité macrobloc, comme étant le produit du coût compressible par le pas de quantification,

Le module 8 calcule le rapport des débits sortants, MeanBpp$_{recod}$, de la boucle de recodage 4 sur le rapport des débits entrants, MeanBpp$_{init}$, dans la boucle de recodage 4.

Le débit sortant, MeanBpp$_{recod}$ est calculé à partir du débit de consigne fourni par l'organe de supervision.

$$MeanBpp_{recod} = \frac{D_{recod}}{frame\_rate} \times nbimages$$

Où :

- D$_{recod}$ est le débit de consigne de recodage, exprimé en bit/s.
- Nbimages est le nombre d'images dans la période de référence.
- frame_rate est le nombre d'images par seconde.

$$MeanBpp_{init} = \frac{GOP \cos t}{Nbimages\_GOP}$$

Où :

- GOPcost représente le coût total (compressible et non compressible) d'un GOP.
- Nbimages_GOP représente le nombre d'images dans le GOP.

Le module 8 estime la complexité et le coût non compressible de chaque image à recoder et du GOP courant auquel appartient l'image à recoder.

L'organe de prédiction 8 calcule pour chaque image, comme indiqué précédemment dans le mode de réalisation général, le rapport (Ratio$_{overhead}$) entre le coût non compressible initial de l'image codée sur le coût non compressible de l'image recodée et le rapport (Ratio$_x$) entre la complexité initiale de l'image codée sur la complexité de l'image recodée.

Afin d'éviter de prendre en compte de façon brutale un des rapports précédents qui se situerait hors limite acceptable, et qui serait par exemple issu d'une mauvaise mesure ou d'une image traduisant un particularisme ponctuel, les rapports sont bornés selon la formule suivante :

$$RedFactor_{overhead} = Ratio_{overhead} \in [MINRatio_{overhead}, 1]$$

$$RedFactor_x = Ratio_x \in [MINRatio_x, 1]$$

Où:

$$MINRatio_{overhead} = (1 - Weight_{overhead}[mode]) + Weight_{overhead}[mode] \times ratiorate$$

$$MINRatio_x = (1 - Weight_x[mode]) + Weight_x[mode] \times ratiorate$$

Où Weight$_{overhead}$[mode] et Weight$_x$[mode] sont des constantes.

La borne maximale choisie est « 1 » car le recodage ne peut pas créer un accroissement de complexité.

Les rapports de complexité et de coût de codage sont fonction du rapport des débits entrant dans la boucle de recodage et des débits sortant de la boucle de recodage et également diffèrent suivant le mode de codage.

Le module 8 calcule un rapport de coût non compressible moyenné, et un rapport de complexité moyenné pour chaque mode de codage :

Pour les images codées en mode intra (I)

$$SmoothedRatio_{overhead} = RedFactor_{overhead}$$

$$SmoothedRatio_x = RedFactor_x$$

Pour les images codées en mode Bidirectionnel (B) ou Prédictif (P) :

$$SmoothedRatio_{overhead} = \frac{2 \times SmoothedRatio_{overhed} + RedFactor_{overhead}}{3}$$

$$SmoothedRatio_x = \frac{2 \times SmoothedRatio_x + RedFactor_x}{3}$$

Ces deux rapports étant initialisés respectivement aux valeurs suivantes :

$$(1 - Weight_{overhead}[mode]) + Weight_{overhead}[mode] \times Ratiorate$$

$$(1 - Weight_x[mode]) + Weight_x[mode] \times Ratiorate$$

Le module 8 estime ensuite la complexité, $X_{pred}$, et le coût de recodage non compressible, Overhead$_{pred}$, de l'image courante à recoder comme indiqué dans l'exemple de réalisation général.

Ensuite, il estime la complexité, GOPX$_{pred}$, et le coût non compressible, GOPOverhead$_{pred}$, du GOP courant selon les formules suivantes :

$$GOPOverhead_{pred} = SmoothedRatio_{overhead}[I] \times IGOPOverhead_{init} +$$

$$SmoothedRatio_{overhead}[B] \times BGOPOverhead_{init} +$$

$$SmoothedRatio_{overhead}[P] \times PGOPOverhead_{init}$$

$$GOPX_{pred} = ZI \times SmoothedRatio_x[I] \times IGOPX_{init} +$$

$$ZP \times SmoothedRatio_x[P] \times PGOPX_{init} +$$

$$ZB \times SmoothedRatio_x[B] \times BGOPX_{init}$$

Les constantes de pondération ZI, ZB, ZP sont des constantes obéissant à la règle:

$$ZI \times QI = ZP \times QP = ZB \times QP$$

Ces constantes traduisent le fait que pour avoir une impression de qualité de codage constante, il faut quantifier différemment les images I, B et P, les images B étant quantifiées plus durement.

L'organe de régulation 7 calcule le coût de consigne image en fonction des complexités estimées selon la formule suivante :

$$T \arg et \cos t = \frac{Z[mode]}{GOPX_{pred}} \times X_{pred} \times GOPT \arg et \cos t$$

avec

$$GOPT \arg et \cos t = (MeanBPP_{recod} \times Nbimages) - GOPOverhead_{pred}$$

Il calcule également le gain, GainC, à réaliser sur l'image à recoder, en pourcentage, suivant la formule :

$$GainC = \frac{100 \times (Enc \cos t_{init} - T \arg et \cos t)}{Enc \cos t_{init}}$$

Ce gain est transmis à l'organe de requantification 6 qui calcule le pas de quantification de recodage, $Q_{recod}$, selon la formule suivante :

$$Q_{recod} = \frac{SmoothedRatio_x[mode]}{1 - GainC} \times Q_{init}$$

2- L'exemple donné ci-après décrit un mode de réalisation particulier dans le cas d'un transcodeur de type MPEG-2 vers MPEG-4 AVC.

Les différents modes de codage sont toujours le mode Intra (I), Bidirectionnel (B) ou Prédictif (P).
L'organe de mesure à priori 9 extrait comme dans l'exemple précédent pour chaque macrobloc de l'image :

- le coût compressible initial et le coût non compressible initial,
- le pas de quantification,

Il calcule ensuite pour chaque macrobloc la complexité macrobloc, comme étant le produit du coût compressible par le pas de quantification.
Ensuite pour chaque image, il calcule :

- le coût compressible initial, $Enccost_{init}$,
- le coût non compressible initial, $Overhead_{init}$,
- la complexité image initiale, $X_{init}$,

en additionnant respectivement les coûts compressibles, non compressibles et les complexités initiaux des macroblocs formant cette image.

L'organe de mesure calcule ensuite pour chaque groupe d'images (GOP),

- le cumul des coûts compressibles initiaux des images I,
- le cumul des coûts compressibles initiaux des images B,
- le cumul des coûts compressibles initiaux des images P,
- le cumul des coûts non compressibles initiaux des images I, IGOPOverhead$_{init}$.
- le cumul des coûts non compressibles initiaux des images B, BGOPoverhead$_{init}$.
- le cumul des coûts non compressibles initiaux des images P, PGOPoverhead$_{init}$.
- le cumul des complexités initiales des images I, IGOPX$_{init}$,
- le cumul des complexités initiales des images B, BGOPX$_{init}$,
- le cumul des complexités initiales des images P, PGOPX$_{init}$,
- le coût total initial du GOP, GOPcost.

L'organe de mesure à posteriori 5 calcule pour chaque macrobloc de l'image recodée :

- le coût compressible,
- le pas de quantification,
- la complexité macrobloc, comme étant le produit du coût compressible par le pas de quantification,

Le module 8 calcule le rapport des débits sortants, MeanBpp$_{recod}$, de la boucle de recodage 4 sur le rapport des débits entrants, MeanBpp$_{init}$, dans la boucle de recodage 4.
Le débit sortant, MeanBpp$_{recod}$ est calculé à partir du débit de consigne fourni par l'organe de supervision.

$$MeanBpp_{recod} = \frac{D_{recod}}{frame\_rate} \times nbimages$$

Où:

- D$_{recod}$ est le débit de consigne de recodage, exprimé en bit/s.
- Nbimages est le nombre d'images dans la période de référence.
- frame_rate est le nombre d'images par seconde.

$$MeanBpp_{init} = \frac{GOP \cos t}{Nbimages\_GOP}$$

Où :

- GOPcost représente le coût total (compressible et non compressible) d'un GOP.
- Nbimages_GOP représente le nombre d'images dans le GOP.

Le module 8 estime la complexité et le coût non compressible de chaque image à recoder et du GOP courant auquel appartient l'image à recoder.
L'organe de prédiction 8 calcule pour chaque image, comme indiqué précédemment dans le mode de réalisation général, le rapport (Ratio$_{overhead}$) entre le coût non compressible initial de l'image codée sur le coût non compressible de l'image recodée et le rapport (Ratio$_x$) entre la complexité initiale de l'image codée sur la complexité de l'image recodée.
Afin d'éviter de prendre en compte de façon brutale un des rapports précédents qui se situerait hors limite acceptable, et qui serait par exemple issu d'une mauvaise mesure ou d'une image traduisant un particularisme ponctuel, les rapports sont bornés selon la formule suivante :

$$RedFactor_{overhead} = Ratio_{overhead} \in [MINRatio_{overhead}, 1]$$

$$RedFactor_x = Ratio_x \in [MINRatio_x, 1]$$

Où :

$$MINRatio_{overhead} = (1 - Weight_{overhead}[\text{mode}]) + Weight_{overhead}[\text{mode}] \times ratiorate$$

$$MINRatio_x = (1 - Weight_x[\text{mode}]) + Weight_x[\text{mode}] \times ratiorate$$

Où Weight$_{overhoad}$[mode] et Weight$_x$[mode] sont des constantes.

Les rapports de complexité et de coût de codage sont fonction du rapport des débits entrant dans la boucle de recodage et des débits sortant de la boucle de recodage et également diffèrent suivant le mode de codage.

Le module 8 calcule un rapport de coût non compressible moyenné, et un rapport de complexité moyenné pour chaque mode de codage :

Pour les images codées en mode intra (I)

$$SmoothedRatio_{overhead} = RedFactor_{overhead}$$

$$SmoothedRatio_x = RedFactor_x$$

Pour les images codées en mode Bidirectionnel (B) ou Prédictif (P) :

$$SmoothedRatio_{overhead} = \frac{2 \times SmoothedRatio_{overhead} + RedFactor_{overhead}}{3}$$

$$SmoothedRatio_x = \frac{2 \times SmoothedRatio_x + RedFactor_x}{3}$$

Ces deux rapports étant initialisés respectivement aux valeurs suivantes :

$$(1 - Weight_{overhead}[\text{mode}]) + Weight_{overhead}[\text{mode}] \times Ratiorate$$

$$(1 - Weight_x[\text{mode}]) + Weight_x[\text{mode}] \times Ratiorate$$

Le module 8 estime ensuite la complexité, $X_{pred}$, et le coût de recodage non compressible, Overhead$_{pred}$, de l'image courante à recoder comme indiqué dans l'exemple de réalisation général.

Ensuite, il estime la complexité, GOPX$_{pred}$, et le coût non compressible, GOPOverhead$_{pred}$, du GOP courant selon les formules suivantes :

$$GOPOverhead_{pred} = SmoothedRatio_{overhead}[I] \times IGOPOverhead_{init} +$$

$$SmoothedRatio_{overhead}[B] \times BGOPOverhead_{init} +$$

$$SmoothedRatio_{overhead}[P] \times PGOPOverhead_{init}$$

$$GOPX_{pred} = ZI \times SmoothedRatio_x[I] \times IGOPX_{init} +$$

$$ZP \times SmoothedRatio_x[P] \times PGOPX_{init} +$$

$$ZB \times SmoothedRatio_x[B] \times BGOPX_{init}$$

Les constantes de pondération ZI, ZB, ZP sont des constantes obéissant à la règle :

EP 1 474 928 B1

$$ZI \times QI = ZP \times QP = ZB \times QP$$

Ces constantes traduisent le fait que pour avoir une impression de qualité de codage constante, il faut quantifier différemment les images I, B et P, les images B étant quantifiées plus durement.

L'organe de régulation 7 calcule enfin le coût de consigne image en fonction des complexités estimées selon la formule suivante :

$$T \arg et \cos t = \frac{Z[mode]}{GOPX_{pred}} \times X_{pred} \times GOPT \arg et \cos t$$

avec

$$GOPT \arg et \cos t = (MeanBPP_{recod} \times Nbimages) - GOPOverhead_{pred}$$

Ce coût de consigne image est transmis au module 6 de re-quantification. En fonction de ce coût de consigne, le module 6 va quantifier l'image à recoder.

## Revendications

1. Dispositif de recodage d'images selon un débit de consigne donné d'un flux vidéo comportant des séquences d'images initialement codées selon au moins un mode, comportant :

   - des moyens d'extraire des informations associées au recodage des images, lesdites informations représentant au moins la complexité (Xrecod) de recodage de chaque image,
   - des moyens d'extraire des informations, notamment de complexité de codage ($X_{init}$), associées au codage initial des images,

   **caractérisé en ce qu'**il comporte :

   - des moyens de calculer un rapport ($Ratio_x$), dit rapport de complexité, des complexités ($X_{recod}$) de recodage des images précédemment recodées selon ledit mode sur les complexités ($X_{init}$) de codage initial de ces images,
   - des moyens de mettre à jour un rapport de complexité moyenné ($SmoothedRatio_x$ [mode]) pour ledit mode en fonction du rapport de complexité ($Ratio_x$) et
   - des moyens de recoder chaque image selon ledit mode en estimant la complexité ($X_{pred}$) de chaque image à recoder comme étant le produit de la complexité ($X_{init}$) de codage initial de ladite image par le rapport de complexité moyenné pour ledit mode ($SmoothedRatio_x$ [mode]).

2. Dispositif de recodage selon la revendication 1 **caractérisé en ce qu'**il comporte

   - des moyens d'extraire le coût non compressible de codage initial ($Overhead_{init}$) de chaque image,
   - des moyens d'extraire le coût non compressible de recodage ($Overhead_{recod}$) de chaque image recodée,
   - des moyens de calculer un rapport ($Ratio_{overhead}$), dit rapport de coût non compressible, des coûts non compressibles ($Overhead_{recod}$) de recodage d'images précédemment recodées selon ledit mode sur les coûts non compressibles ($Overhead_{init}$) de codage initial de ces images,
   - des moyens de mettre à jour un rapport de coût non compressible moyenné ($SmoothedRatio_{overhead}$ [mode]) pour ledit mode en fonction du rapport de coût non compressible ($Ratio_{overhead}$) et
   - les moyens de recoder chaque image selon ledit mode estimant le coût non compressible ($Overhead_{pred}$) de chaque image à recoder comme étant le produit du coût non compressible de codage initial ($Overhead_{init}$) de ladite image par le rapport de coût non compressible moyenné pour ledit mode ($SmoothedRatio_{overhead}$).

3. Dispositif selon l'une des revendications 1 à 2 **caractérisé en ce qu'**il comporte des moyens de mémoriser, pour plusieurs images consécutives définissant une période de référence, des informations associées au codage initial, lesdites informations étant

- la complexité de codage initial (GlobalX$_{init}$) des images de la période de référence,
- le coût non compressible (GlobalOverhead$_{init}$) de codage initial des images de la période de référence,

4. Dispositif selon la revendication 3 **caractérisé en ce que** les moyens de recoder chaque image sont fonction des informations associées au codage initial des images appartenant à la période de référence.

5. Dispositif selon l'une des revendications 3 à 4 **caractérisé en ce qu'**il comporte des moyens d'estimation du coût de recodage non compressible total (GlobalOverhead$_{pred}$) de chaque période de référence.

6. Dispositif selon l'une des revendications 3 à 5 **caractérisé en ce qu'**il comporte des moyens d'estimation de la complexité totale de recodage (GlobalX$_{pred}$) de chaque période de référence.

7. Dispositif selon la revendication 6 **caractérisé en ce qu'**il comporte des moyens de calcul d'un coût compressible de consigne (Targetcost) pour chaque image à recoder en fonction au moins de sa complexité de recodage estimée (X$_{pred}$) relative par rapport à la complexité totale (GlobalX$_{pred}$) de recodage de la période de référence.

8. Dispositif selon la revendication 7 **caractérisé en ce qu'**il comporte

- des moyens d'extraire le coût de codage initial (Enccost$_{init}$) de ladite image,
- des moyens de calcul d'un gain de compression (GainC) à appliquer sur chaque image à recoder en fonction du coût compressible de consigne (Targetcost) et du coût compressible de codage initial (Enccost$_{init}$) de ladite image.

9. Dispositif selon la revendication 8 **caractérisé en ce qu'**il comporte des moyens de calcul de la quantification moyenne à appliquer sur chaque image à recoder (Q$_{recod}$) en fonction du gain de compression (GainC), du rapport de complexité moyenné pour le mode de codage de l'image à recoder (SmoothedRatio$_x$ [mode]), et de la quantification moyenne appliquée pour le codage initial de l'image à recoder (Q$_{init}$).

10. Procédé de recodage d'images selon un débit de consigne donné d'un flux vidéo comportant des séquences d'images initialement codées selon au moins un mode, comportant les étapes de:

- extraction des informations associées au recodage de certaines images, lesdites informations représentant au moins la complexité (Xrecod) de recodage de chaque image,
- extraction des informations, notamment de complexité de codage (X$_{init}$), associées au codage initial de certaines images,

**caractérisé en ce qu'**il comporte les étapes de:

- calcul d'un rapport (Ratio$_x$), dit rapport de complexité, des complexités (X$_{recod}$) de recodage des images précédemment recodées selon ledit mode sur les complexités (X$_{init}$) de codage initial de ces images,
- mise à jour d'un rapport de complexité moyenné (SmoothedRatio$_x$ [mode]) pour ledit mode en fonction du rapport de complexité (Ratio$_x$) et
- recodage de chaque image selon ledit mode en estimant la complexité (X$_{pred}$) de chaque image à recoder comme étant le produit de la complexité (X$_{init}$) de codage initial de ladite image par le rapport de complexité moyenné pour ledit mode (SmoothedRatio$_x$ [mode]).

**Patentansprüche**

1. Vorrichtung zur Umcodierung von Bildern gemäß einer bestimmten vorgegebenen Bitrate eines Videostroms mit Bildfolgen, die anfänglich gemäß wenigstens einem Modus codiert sind, mit:

- Mitteln zur Extraktion von Informationen für die Umcodierung der Bilder, wobei diese Informationen wenigstens die Komplexität (Xrecod) der Umcodierung jedes Bilds darstellen,
- Mitteln zur Extraktion von Informationen, insbesondere der Codierkomplexität (X$_{init}$), für die anfängliche Codierung der Bilder,

**gekennzeichnet durch**

- Mittel zur Berechnung eines Verhältnisses (Ration$_x$) des so genannten Verhältnisses der Komplexitäten (X$_{recod}$) der Umcodierung der vorher umcodierten Bilder gemäß dem zweiten Modus auf die Komplexitäten X$_{init}$ der anfänglichen Codierung dieser Bilder,
- Mittel zur Aktualisierung eines gemittelten Komplexitätsverhältnisses (SmoothedRatio$_x$[mode]) für den Modus als Funktion des Komplexitätsverhältnisses (Ratio$_x$) und
- Mittel zur Umcodierung jedes Bilds gemäß dem Modus **durch** Schätzung der Komplexität (x$_{pred}$) jedes umzucodierenden Bildes als das Produkt der Komplexität (X$_{init}$) der anfänglichen Codierung und des gemittelten Komplexitätsverhältnisse für diesen Modus (SmoothedRatio$_x$[mode]).

2.  Vorrichtung zur Umcodierung nach Anspruch 1, **gekennzeichnet durch**

- Mittel zur Extraktion der nicht reduzierbaren Kosten der anfänglichen Codierung (Overhead$_{init}$) jedes Bilds,
- Mittel zur Extraktion der nicht reduzierbaren Kosten der Umcodierung (Overhead$_{record}$) jedes umcodierten Bilds,
- Mittel zur Berechnung eines Verhältnisses (Ratio$_{overhead}$), bezeichnet mit nicht reduzierbares Kostenverhältnis, der nicht reduzierbaren Kosten (Overhead$_{record}$) der Umcodierung von vorher umcodierten Bildern gemäß dem Modus der nicht reduzierbaren Kosten (Overhead$_{init}$) der anfänglichen Codierung dieser Bilder für das gemittelte nicht reduzierbare Kostenverhältnis für diesen Modus (Overhead$_{init}$)
- Mittel zur Aktualisierung eines Verhältnisses der nicht reduzierbaren Kosten (SmoothedRatio$_{overhead}$[mode]) für den Modus als Funktion des Verhältnisses der nicht reduzierbaren Kosten (Ratio$_{overhead}$) und
- Mittel zur Umcodierung jedes Bilds gemäß dem Modus zur Schätzung der nicht reduzierbaren Kosten (Overhead$_{pred}$) jedes umzucodierenden Bilds als das Produkt der anfänglichen nicht reduzierbaren Kosten (Overhead$_{init}$) der anfänglichen Codierung des Bildes mal dem gemittelten Verhältnis der nicht reduzierbaren Kosten für diesen Modus (SmoothedRatio$_{overhead}$).

3.  Vorrichtung nach einem der Ansprüche 1 bis 2, **gekennzeichnet durch** Speichermittel für mehrere aufeinander folgende Bilder, die eine Referenzperiode bilden, von Informationen für die anfängliche Codierung dieser Informationen, die folgendes sind:

- die Komplexität der anfänglichen Codierung (GlobalX$_{init}$) der Bilder der Referenzperiode,
- die nicht reduzierbaren Kosten (GlobalOverhead$_{init}$) der anfänglichen Codierung der Bilder der Referenzperiode.

4.  Gerät nach Anspruch 3, **dadurch gekennzeichnet, dass** die Mittel zur Umcodierung jedes Bilds abhängig sind von den Informationen für die anfängliche Codierung der Bilder, die zu der Referenzperiode gehören.

5.  Vorrichtung nach einem der Ansprüche 3 bis 4, **gekennzeichnet durch** Mittel zur Schätzung der gesamten nicht reduzierbaren Umcodierkosten (GlobalOverhead$_{pred}$) jeder Referenzperiode.

6.  Vorrichtung nach einem der Ansprüche 3 bis 5, **gekennzeichnet durch** Mittel zur Schätzung der gesamten Komplexität der Umcodierung (GlobalX$_{pred}$) jeder Referenzperiode.

7.  Vorrichtung nach Anspruch 6, **gekennzeichnet durch** Mittel zur Berechnung von voreingestellten reduzierbaren Kosten (Targetcost) für jedes umzucodierende Bild als eine Funktion wenigstens der relativen geschätzten Umcodierungs-Komplexität (X$_{pred}$) für die Gesamtkomplexität (GlobalX$_{pred}$) der Umcodierung der Referenzperiode.

8.  Vorrichtung nach Anspruch 7, **gekennzeichnet durch**

- Mittel zur Extraktion der anfänglichen Codierkosten (Enccost$_{init}$) des Bilds,
- Mittel zur Berechnung einer Komprimierzunahme (GainC) für die Anwendung bei jedem umzucodierenden Bild als eine Funktion der voreingestellten Komprimierkosten (Targetcost) und der reduzierbaren Kosten der anfänglichen Codierung (Enccost$_{init}$) des Bilds.

9.  Vorrichtung nach Anspruch 8, **gekennzeichnet durch** Mittel zur Berechnung der mittleren Quantisierung für die Anwendung auf jedes umzucodierende Bild (Q$_{redod}$) als eine Funktion der Komprimierverstärkung (GainC) der gemittelten Komplexitätsverhältnisse für den Modus der Codierung des umzucodierenden Bilds ((SmoothedRatio$_x$[mode]) und der mittleren Quantisierung für die anfängliche Codierung des umzucodierenden Bilds (Q$_{init}$).

**10.** Verfahren zur Umcodierung von Bildern gemäß einer gegebenen Vorsetzbitrate eines Videostroms mit anfänglichen gemäß wenigstens einem Modus codierten Bildfolgen mit folgenden Schritten:

- Extraktion der Informationen für die Umcodierung bestimmter Bilder, wobei die Informationen wenigstens die Komplexität (Xrecod) der Umcodierung jedes Bilds darstellen,
- Extraktion der Informationen, insbesondere der Codier-Komplexitätsinformation ($X_{init}$) für die anfängliche Codierung bestimmter Bilder,

**gekennzeichnet durch** folgende Schritte:

- Berechnung eines Verhältnisses ($Ratio_x$), des so genannten Komplexitätsverhältnisses, der Komplexitäten ($X_{recod}$) der Umcodierung der vorher neu codierten Bilder gemäß dem Modus bei den Komplexitäten ($X_{init}$) der anfänglichen Codierung dieser Bilder,
- Aktualisierung eines mittleren Komplexitätsverhältnisses (SmoothedRatio$_x$[mode]) für den Modus in Abhängigkeit von dem Komplexitätsverhältnis ($Ratio_x$) und
- Umcodierung jedes Bilds gemäß dem Modus **durch** Schätzung der Komplexität ($X_{pred}$) jedes umzucodierenden Bilds als das Produkt der Komplexität ($X_{init}$) der anfänglichen Codierung des Bilds als mit der mittleren Komplexität für diesen Modus (SmoothedRatio$_x$[mode]).

**Claims**

**1.** A device for re-encoding images according to a given preset bit rate of a video stream comprising image sequences initially coded according to at least one mode, comprising:

- means for extracting information associated with the re-encoding of the images, said information representing at least the complexity (Xrecod) of re-encoding of each image,
- means for extracting information, in particular coding complexity information ($X_{init}$), associated with the initial coding of the images,

**characterized in that** it comprises:

- means for calculating a ratio ($Ratio_x$), the so-called complexity ratio, of the complexities ($X_{recod}$) of re-encoding of the images previously re-encoded according to said mode to the complexities ($X_{init}$) of initial coding of these images,
- means for updating an averaged complexity ratio (SmoothedRatio$_x$ [mode]) for said mode as a function of the complexity ratio ($Ratio_x$) and
- means for re-encoding each image according to said mode by estimating the complexity ($X_{pred}$) of each image to be re-encoded as being the product of the complexity ($X_{init}$) of initial coding of said image times the averaged complexity ratio for said mode (SmoothedRatio$_x$ [mode]).

**2.** The re-encoding device as claimed in claim 1, **characterized in that** it comprises

- means for extracting the incompressible cost of initial coding (Overhead$_{init}$) of each image,
- means for extracting the incompressible cost of re-encoding (Overhead$_{recod}$) of each re-encoded image,
- means for calculating a ratio ($Ratio_{overhead}$), the so-called incompressible cost ratio, of the incompressible costs (Overhead$_{recod}$) of re-encoding of images previously re-encoded according to said mode to the incompressible costs (Overhead$_{init}$) of initial coding of these images,
- means for updating an averaged incompressible cost ratio (SmoothedRatio$_{overhead}$ [mode]) for said mode as a function of the incompressible cost ratio ($Ratio_{overhead}$) and
- means for re-encoding each image according to said mode estimating the incompressible cost (Overhead$_{pred}$) of each image to be re-encoded as being the product of the incompressible cost (Overhead$_{init}$) of initial coding of said image times the averaged incompressible cost ratio for said mode (SmoothedRatio$_{overhead}$).

**3.** The device as claimed in one of claims 1 to 2, **characterized in that** it comprises means for storing, for several consecutive images defining a reference period, information associated with the initial coding, said information being

- the complexity of initial coding (GlobalX$_{init}$) of the images of the reference period,
- the incompressible cost (GlobalOverhead$_{init}$) of initial coding of the images of the reference period.

4.  The device as claimed in claim 3, **characterized in that** the means for re-encoding each image are dependent on the information associated with the initial coding of the images belonging to the reference period.

5.  The device as claimed in one of claims 3 to 4, **characterized in that** it comprises means for estimating the total incompressible re-encoding cost (GlobalOverhead$_{pred}$) of each reference period.

6.  The device as claimed in one of claims 3 to 5, **characterized in that** it comprises means for estimating the total complexity of re-encoding (GlobalX$_{pred}$) of each reference period.

7.  The device as claimed in claim 6, **characterized in that** it comprises means for calculating a preset compressible cost (Targetcost) for each image to be re-encoded as a function of at least its relative estimated re-encoding complexity (X$_{pred}$) with respect to the total complexity (GlobalX$_{pred}$) of re-encoding of the reference period.

8.  The device as claimed in claim 7, **characterized in that** it comprises

    - means for extracting the cost of initial coding (Enccost$_{init}$) of said image,
    - means for calculating a compression gain (GainC) to be applied to each image to be re-encoded as a function of the preset compressible cost (Targetcost) and of the compressible cost of initial coding (Enccost$_{init}$) of said image.

9.  The device as claimed in claim 8, **characterized in that** it comprises means for calculating the average quantization to be applied to each image to be re-encoded (Q$_{recod}$) as a function of the compression gain (GainC), of the averaged complexity ratio for the mode of coding of the image to be re-encoded (SmoothedRatio$_x$ [mode]), and of the average quantization applied to the initial coding of the image to be re-encoded (Q$_{init}$).

10. A process for re-encoding images according to a given preset bit rate of a video stream comprising image sequences initially coded according to at least one mode, comprising the steps of:

    - extracting information associated with the re-encoding of certain images, said information representing at least the complexity (Xrecod) of re-encoding of each image,
    - extracting information, in particular coding complexity information (X$_{init}$), associated with the initial coding of certain images,

    **characterized in that** it comprises: the steps of

    - calculating a ratio (Ratio$_x$), the so-called complexity ratio, of the complexities (X$_{recod}$) of re-encoding of the images previously re-encoded according to said mode to the complexities (X$_{init}$) of initial coding of these images,
    - updating an averaged complexity ratio (SmoothedRatio$_x$ [mode]) for said mode as a function of the complexity ratio (Ratio$_x$) and
    - re-encoding each image according to said mode by estimating the complexity (X$_{pred}$) of each image to be re-encoded as being the product of the complexity (X$_{init}$) of initial coding of said image times the averaged complexity ratio for said mode (SmoothedRatio$_x$ [mode]).

**Figure 1**

**Figure 2**